# EUROPÄISCHE PATENTSCHRIFT

(11) **EP 2 168 220 B1**
(45) Veröffentlichungstag und Bekanntmachung des Hinweises auf die Patenterteilung: **11.05.2011**
(21) Anmeldenummer: 08758967.7
(22) Anmeldetag: 03.06.2008
(51) Int. Cl.: H02J 5/00

(54) **LEITUNGSABSCHLUSSGLIED UND VORRICHTUNG ZUR BERÜHRUNGSLOSEN LEISTUNGS-UND DATENÜBERTRAGUNG**
LINE TERMINATION ELEMENT AND APPARATUS FOR THE CONTACTLESS TRANSMISSION OF POWER AND DATA
ÉLÉMENT DE TERMINAISON DE LIGNE ET DISPOSITIF DE TRANSMISSION SANS CONTACT DE PUISSANCE ET DE DONNÉES

(30) Priorität: 11.07.2007 DE 102007032644
(43) Veröffentlichungstag der Anmeldung: 31.03.2010
(73) Patentinhaber: SEW-EURODRIVE GmbH & Co. KG, 76646 Bruchsal (DE)
(72) Erfinder: SIMON, Olaf, 76646 Bruchsal (DE); HUA, Zhidong, 76131 Karlsruhe (DE); SCHNEIDER, Bernhard, 68794 Oberhausen-Rheinhausen (DE)
(86) Internationale Anmeldenummer: PCT/EP2008/004402
(87) Internationale Veröffentlichungsnummer: WO 2009/006969

(56) Entgegenhaltungen:
- WO-A-98/57413
- DE-C1- 10 225 005
- GB-A- 2 100 069
- US-A- 3 555 291

## Beschreibung

Die Erfindung betrifft ein Leitungsabschlussglied und eine Vorrichtung zur berührungslosen Leistungs- und Datenübertragung.

Aus der US 6 515 878 B1 ist ein System zur berührungslosen Leistungsübertragung bekannt, wobei ein Wechselstrom mit einer festgelegten Amplitude in ein Primärleitersystem eingespeist wird, bewegliche Verbraucher an das Primärleitersystem angekoppelt sind und am Ende des Primärleitersystems zur Leistungskompensation Kondensatoren angeschlossen sind. Die Ankopplung der beweglichen Verbraucher erfolgt über jeweils wenigstens zwei Wicklungen, die auf einem ferromagnetischen Kern derart angeordnet sind, so sie teilweise magnetisch gekoppelt und teilweise nicht magnetisch gekoppelt sind, wobei die zwei Wicklungen jeweils durch eine parallele Kapazität kompensiert sind durch eine Kompensationsschaltung automatisch an eine Sekundärlast eine konstante Spannung liefern.

Aus der DE 103 39 340 A1 ist eine Vorrichtung zur berührungslosen Energieübertragung bekannt, bei der ein Übertragerkopf Induktivitäten und Kapazitäten zur Leistungsanpassung aufweist.

Aus der GB 2 100 069 A ist eine Vorrichtung zur berührungslosen induktiven Ankopplung eines Dreiphasen-Motors an Dreiphasen-Stromschienen bekannt. Eine Datenübertragung ist über eine kapazitive Ankopplung an die Stromschienen vorgesehen. Die verwendeten Stromschienen sind an Ihrem der Spannungsversorgung abgewandten Ende durch einen einfachen Stern abgeschlossen.

Aus der US 3,555,291 ist ein Leistungsübertragungsfilter bekannt, welcher zwischen einem Wechselstromgenerator und einem Konverter mit einer Phase der dreiphasigen Verbindungsleitung verbunden ist.

Aus der DE 102 25 005 C1 ist ein Verlängerungsstück für die Primärseite einer Vorrichtung zur induktiven Übertragung elektrischer Energie bekannt. Eine Datenübertragung ist hierbei nicht vorgesehen.

Der Erfindung liegt die Aufgabe zugrunde, eine Vorrichtung zur berührungslosen Leistungs- und Datenübertragung weiterzubilden, wobei die Datenübertragung verbessert ist.

Erfindungsgernäß wird die Aufgabe bei dem Leitungsabschlussglied nach den in Anspruch 1 oder 3 angegebenen Merkmalen und bei der Vorrichtung zur berührungslosen Leistungs- und Datenübertragung nach den in Anspruch 4angegebenen Merkmalen gelöst.

Wichtige Merkmale der Erfindung eines Leitungsabschlussglieds sind in Anspruch 1 angegeben. Insbesondere ist somit vorgesehen, dass eine Parallelschaltung eines Reihenschwingkreises und eines Hochpasses umfasst sind, wobei der Reihenschwingkreis eine Drossel aufweist, deren Wicklung aus verdrilitem Litzenkabel gefertigt ist und der Reihenschwingkreis für einem stärkeren, insbesondere einem 10 mal oder 100 mal stärkeren Strom ausgelegt ist als der Hochpass. Vorzugsweise ist das Leitungsabschlussglied zum Anschluss an das Primärleitersystem ausgebildet, in dem mittelfrequente Wechselströme mit einer Stromstärke von über 10A transportierbar sind. Von Vorteil ist bei der Erfindung, dass das Leitungsabschlussglied in verschiedenen Frequenzbereichen qualitativ unterschiedliche elektrische Eigenschaften realisiert. Insbesondere ist in einem mittleren Frequenzbereich, unterhalb der Grenzfrequenz des Hochpasses und vorzugsweise in einem schmalen Band um eine Frequenz zwischen 10 kHz und 100 kHz, eine nahezu verlustfreie Leitung ermöglicht. Somit kann in diesem Frequenzbereich ein großer Strom, insbesondere von mindestens 50 A, fließen, ohne dass eine zerstörerlsche Erwärmung auftritt. Gleichzeitig ist in einem breitbandigen Bereich oberhalb der Grenzfrequenz ein höherer Wirkwiderstand einstellbar, der einen reflexionsarmen Abschluss in diesem Bereich darstellt, beispielsweise für eine Datenkommunikation, und der aber den mittelfrequenten Strom nicht behindert. Unter einem schmalbandigen Bereich wird hierbei ein Frequenzbereich verstanden, der zu einer Frequenz nicht auch Harmonische dieser Frequenz umfasst. Ein breitbandiger Frequenzbereich ist dagegen ein Bereich, der neben einer Grundfrequenz weitere, insbesondere die acht oder sechzehn folgenden, Harmonischen umfasst. In einem breitbandigen Frequenzbereich sind folglich mehrere Frequenzkanäle bereitgestellt, über die mit einem Mehrfrequenz-Trägerverfahren wie beispielsweise OFDM oder orthogonal frequency-division multiplexing, Daten austauschbar sind. In einem schmalbandigen Bereich ist dies dagegen nicht möglich. Ein schmalbandiger Bereich dient vorzugsweise zum Übertragen eines relativ starken Signals fester Frequenz, ein Leistungssignal, auf welche die Empfänger abgestimmt werden zur Versorgung mit elektrischer Leistung aus diesem Signal.

Vorzugsweise ist die Grenzfrequenz des Hochpasses größer, insbesondere 10fach größer, als die Resonanzfrequenz des Reihenschwingkreises. Von Vorteil ist dabei, dass ein Frequenzbereich für eine Datenkommunikation oberhalb der Grenzfrequenz des Hochpasses nutzbar ist, wobei die Datenkommunikation höchstens geringfügig durch ein Leistungssignal gestört wird, das den Reihenschwingkreis ungehindert passieren soll.

Vorzugsweise ist der Reihenschwingkreis für eine stärkeren, insbesondere eine 10mal oder gar 100mal stärkere, Stromstärke ausgelegt als der Hochpass. Somit können für den Hochpass entsprechend kleinere Bauteile eingesetzt werden, wodurch Fertigungskosten verringert sind.

Alternativ ist gemäß Anspruch 3 ein Transformator umfasst, dessen Ausgang, also Sekundärseite, kurzgeschlossen ist, wobei die Sekundärwicklung aus Flachbandkabel gefertigt ist und der Transformator primärseitig in Parallelschaltung mit einem Hochpass verbinden ist, insbesondere mit einem einen Widerstand umfassenden Hochpass. Vorzugsweise ist der Eingang des Transformators, also die Primärseite, mit Mitteln zum Anschluss an ein Primärleitersystem verbindbar, das für eine Stromstärke von über 10 A ausgelegt ist. Somit ist ein Bauteil bereitgestellt, dass für mittlere Frequenzen wie ein Transformator wirkt und für hohe Frequenzen, bei denen die parasitären Kapazitäten des Flachbandkabels die Sekundärspule unwirksam machen, sich wie eine Drossel verhält. Das Leitungsabschlussglied verhält sich in den verschiedenen Frequenzbändern unterschiedlich.

Bei einer vorteilhaften Ausgestaltung ist die Primärseite des Transformators mit einem Hochpass verbunden, der einen Widerstand umfasst. Somit ist das Leitungsabschlussglied in dem Frequenzbereich oberhalb der Grenzfrequenz des durch die parasitären Kapazitäten dargestellten Hochpasses in der Sekundärspule des Transformators als Leitungsabschluss, insbesondere einer Zweidrahtleitung einsetzbar. Vorzugsweise wird ein Widerstand zwischen 200 Ω und 400 Ω eingesetzt.

Unter Grenzfrequenz eines Hochpasses wird in dieser Schrift diejenige Frequenz verstanden, bei der die Durchlässigkeit des Hochpasses um 3dB gegenüber dem Wert der maximalen Durchlässigkeit abgefallen ist.

Wichtige Merkmale der Erfindung einer Vorrichtung zur berührungslosen Leistungs- und Datenübertragung sind in Anspruch 4 angegeben. Die Vorrichtung umfasst demnach ein Primärleitersystem aus einem Hinleiter und einen Rückleiter, einen Generator, der in das Primärleitersystem einen Wechselstrom mit einer ersten Frequenz in einem ersten Frequenzbereich und einer Amplitude I als Leistungssignal einspeist oder einprägt, mindestens einen beweglichen Verbraucher, der induktiv an das Primärleitersystem gekoppelt ist und eine Quelle und/oder Senke für Wechselstrom In einem zweiten Frequenzbereich als Datensignal umfasst. Es ist insbesondere vorgesehen, dass an einem Ende des Primärleitersystems ein Abschlussglied angeschlossen ist, wobei das Abschlussglied im ersten Frequenzbereich einen niedrigen Wirkwiderstand R_{L} und im zweiten Frequenzbereich einen hohen Wirkwiderstand R_{D} aufweist. Vorzugsweise ist der hohe Wirkwiderstand im Wesentlichen gleich dem Leitungswellenwiderstand des Primärleitersystems. Von Vorteil ist dabei, dass eine Datenkommunikation über das Primärleitersystem im zweiten Frequenzbereich durchführbar ist, die wegen des Leitungsabschlusses nicht durch Reflexionen gestört wird. Wegen des niedrigen Wirkwiderstands im ersten Frequenzbereich ist aber trotz des Leitungsabschlusses die Durchleitung eines beträchtlichen Stromes von über 50A möglich, ohne dass übermäßige Verlustleistung erzeugt wird. Bei einem Leitungsabschluss von 200 Ω und einer Stromstärke von 60 A wäre nämlich eine Verlustleistung von 12 kW zu erwarten. Dies wird durch die Erfindung vermieden.

Weiterer Vorteil der Erfindung ist, dass die beweglichen Verbraucher unabhängig von ihrer Position entlang des Primärleitersystems in einem Frequenzbereich senden und empfangen können, ohne das störende Reflexionen am Ende des Primärleitersystems auftreten. Der Primärleiter ist daher in diesem Frequenzbereich reflexionsfrei abgeschlossen, während er im Frequenzbereich des Leistungssignals im Wesentlichen kurzgeschlossen ist.

Bei einer vorteilhaften Ausgestaltung beträgt der niedrige Wirkwiderstand höchstens ein Hundertstel des hohen Wirkwiderstands. Von Vorteil ist dabei, dass die Verlustleistung gering ist und nur einige zehn oder Hundert Watt beträgt.

Bei einer vorteilhaften Ausgestaltung ist das Produkt aus dem hohen Wirkwiderstand R_{D} und dem Quadrat der Amplitude I des Leistungssignals größer als 10kW. Somit ist die Vorrichtung in Anlagen einsetzbar, in denen der Leistungsbedarf so hoch ist, beispielsweise in Anlagen der Antriebs- oder Fertigungstechnik, dass die Verlustleistung über einem Leitungsabschluss zu groß wäre. Somit kann nun auch in derartigen Anlagen die Datenkommunikation über das Primärleitersystem erfolgen.

Bei einer vorteilhaften Ausgestaltung umfasst das Abschlussglied eine Parallelschaltung eines Reihenschwingkreises und eines Hochpasses, wobei der Reihenschwingkreis mit seiner Resonanzfrequenz auf den ersten Frequenzbereich abgestimmt ist und die Grenzfrequenz des Hochpasses oberhalb des ersten Frequenzbereichs liegt. Von Vorteil ist dabei, dass ein Schwingkreis in einem schmalen Bereich um die Resonanzfrequenz einen sehr geringen Wirkwiderstand im bereich einiger zehn mΩ aufweist. Hierdurch ist die Verlustleistung des Leistungssignals begrenzt.

Bei einer vorteilhaften Ausgestaltung umfasst der Hochpass einen ohmschen Widerstand, der im Wesentlichen gleich dem Leitungswellenwiderstand des Primärleitersystems ist. Der Hochpass stellt daher im Durchlassbereich, also insbesondere im zweiten Frequenzbereich, einen Abschluss des Primärleitersystems dar. Somit ist für die Datenkommunikation ein reflexionsarmer Abschluss des Primärleitersystems erreicht. Eine Verzerrung der Datensignale durch Reflexionen ist unterdrückt. Im ersten Frequenzbereich ist der Widerstand wirkungslos, da der Hochpass hier nicht durchlässig ist und sperrt. Somit fällt am Widerstand keine Verlustleistung ab, die vom Leistungssignal herstammt.

Bei einer vorteilhaften Ausgestaltung umfasst der Hochpass einen ohmschen Widerstand von mindestens 100 Ω, insbesondere 200 Ω. Somit ist das Primärleitersystem als Zweidrahtleitung ausbildbar. Aus einer Zweidrahtleitung ist mittels eines E- oder U-förmigen Kerns vorteilhaft und mit hohem Wirkungsgrad elektrische Leistung entnehmbar zur Versorgung von elektrischen Verbrauchern.

Bei einer vorteilhaften Ausgestaltung umfasst der Reihenschwingkreis eine Kapazität von mindestens 100 nF. Somit kann der Reihenschwingkreis mit einer Induktivität von einigen mH ergänzt werden zur Abstimmung auf eine Resonanzfrequenz von 25 kHz. Das Leistungssignal liegt daher im Resonanzbereich des Reihenschwingkreises und kann diesen nahezu verlustfrei passieren.

Bei einer vorteilhaften Ausgestaltung umfasst der Reihenschwingkreis eine Drossel mit einem ferromagnetischen Kern. Von Vorteil ist dabei, dass eine Induktivität für den Reihenschwingkreis ausgebildet ist, die einen mittelfrequenten Starkstrom durchleiten kann.

Bei einer vorteilhaften Ausgestaltung umfasst der ferromagnetische Kern mindestens ein Paar von E-förmigen Kernen, wobei sich die Stirnflächen der äußeren Querbalken der E-förmigen Kerne paarweise berühren und die Drossel eine Wicklung umfasst, welche die mittleren Querbalken der E-förmigen Kerne umschließt. Von Vorteil ist dabei, dass das Magnetfeld in den Kernen nach außen abgeschlossen ist.

Bei einer vorteilhaften Ausgestaltung ist ein Luftspalt zwischen den Stirnflächen der mittleren Querbalken des E-förmigen Kerns ausgebildet. Von Vorteil ist dabei, dass die Hysteresekurve der Magnetisierung in den Kernen abgeflacht wird und die Hysterese verringert wird. Somit ist eine Sättigung der Magnetisierung zu größeren Stromstärken hin verschoben, und die Verluste durch Magnetisierungsströme, hervorgerufen durch ein Leistungssignal von 60 A oder gar 100 A, sind reduziert.

Bei einer vorteilhaften Ausgestaltung umfasst die Drossel mindestens eine Endkappe, auf welche die Wicklung aufgebracht ist, wobei ein Abstand der Wicklung zum mittleren Querbalken des E-förmigen Kerns eingehalten wird. Somit ist zum einen ein einfaches Aufbringen der Wicklung auf die Kerne ermöglicht, denn zunächst können die Endkappen auf einen der E-förmigen Kerne aufgesteckt werden, sodann kann die Wicklung aufgebracht werden und schließlich kann der andere E-förmige Kern eingesteckt werden, zum anderen ist so ein konstanter, vorgegebener Abstand der Wicklung vom mittleren Querbalken und also von besonders starken Inhomogenltäten eingestellt. Somit ist die Rückwirkung des Kerns auf die Windungen der Wicklung in etwa gleich für alle Windungen.

Bei einer vorteilhaften Ausgestaltung überragen die Enden der mittleren Querbalken der E-förmigen Kerne die sie jeweils umschließenden Wicklungen. Somit ist ein Bereich um den Luftspalt zwischen den mittleren Querbalken von den Wicklungen ausgespart. In diesem Bereich ist das induzierte Magnetfeld der Kerne besonders inhomogen. Somit ist die Rückwirkung des Kerns auf die Windungen der Wicklung in etwa gleich für alle Windungen. Bei einer vorteilhaften Ausgestaltung wird die Wicklung aus verdrillten Leitern gebildet. Hierdurch werden ungleiche induzierte Spannungen in den Strängen der Wicklung und daraus resultierende Kreisströme zwischen den Strängen der Wicklung vermieden. Die Leiter der Wicklung werden in etwa gleich belastet und können daher geringer dimensioniert werden.

Bei einer vorteilhaften Ausgestaltung wird die Wicklung aus verdrilltem Litzendraht gebildet.

Bei einer vorteilhaften Ausgestaltung ist der ferromagnetische Kern aus mehreren nebeneinander angeordneten Paaren von E-förmigen Kernen zusammengesetzt, wobei die Wicklung der Drossel die mittleren Querbalken der E-förmigen Kerne umschließt und wobei zwischen der Wicklung und den mittleren Querbalken der E-förmigen Kerne Distanzplatten eingefügt sind. Somit ist der Bereich der Sättigung des weichmagnetischen Kerns zu größeren magnetischen Feldstärken und daher zu größeren Stromstärken hin verschoben. Bei der Stromstärke von 60 A für das Leistungssignal wird der Sättigungsbereich noch nicht erreicht, und thermische Belastung des Leitungsabschlussglieds wird vermieden.

Bei einer vorteilhaften Ausgestaltung ist ein Widerstand parallel zum Eingang eines Transformators geschaltet, wobei der Ausgang des Transformators kurzgeschlossen ist. Vorzugsweise ist der Widerstand im Wesentlichen gleich dem Leitungswellenwiderstand des Primärleitersystems. Somit ist ein alternativer Leitungsabschluss für das Primärleitersystem bereitgestellt, der ebenfalls für das Leistungssignal durchlässig ist, während er für ein Datensignal durch den gewählten ohmschen Widerstand gegeben ist.

Bei einer vorteilhaften Ausgestaltung ist die Sekundärwicklung des Transformators aus einem Flachbandkabel gefertigt. Im Flachbandkabel bilden sich parasitäre Kapazitäten, die den Transformator für hohe Frequenzen als Drossel erscheinen lassen. Somit ist für diese Frequenzen nur der parallel geschaltete Widerstand maßgeblich.

Bei einer vorteilhaften Ausgestaltung beträgt die Amplitude I des Leistungssignals mindestens 50A, insbesondere mindestens 60A. Von Vorteil ist dabei, dass die Verbraucher elektrische Antriebseinheiten im kW-Bereich umfassen können, die aus dem Leistungssignal im Primärleiter mit berührungsloser Leistungsversorgung gespeist werden.

Bei einer vorteilhaften Ausgestaltung beträgt die erste Frequenz 25kHz. Alternativ beträgt die erste Frequenz 10 kHz oder 20 kHz oder 50 kHz oder 100 kHz oder liegt im Bereich zwischen 10 kHz und 100 kHz. Es hat sich herausgestellt, dass bei diesen Frequenzen eine Kopplung der versorgten Verbraucher an den Primärleiter mit besonders hohem Wirkungsgrad möglich ist.

Bei einer vorteilhaften Ausgestaltung erstreckt sich das zweite Frequenzbereich oberhalb von 500kHz, insbesondere zwischen 1 MHz und 2 MHz oder oberhalb von 1 MHz. Somit ist vorteilhaft eine Datenkommunikation im Mehrfrequenz-Trägerverfahren durchführbar. Insbesondere ist eine Grundfrequenz wählbar, die deutlich über den ersten Harmonischen des Leistungssignals liegt, wodurch eine Störung der Datenkommunikation durch Leistungsspitzen in den Verbrauchern vermieden wird.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

### Bezugszeichenliste

- 1: Konstantstromquelle
- 2: Hinleiter
- 3: Rückleiter
- 4: Verbraucher
- 5: Pickup-Spule
- 6: Leitungsabschluss
- 7: Antriebseinheit
- 8: Kapazität
- 20: Leitungsabschlussglied
- 21: Hinleiter
- 22: Rückleiter
- 23: Kern
- 30: Drossel
- 31: Kern
- 32: Kern
- 33: Wicklung
- 34: Windung
- 35: Drosselanschluss
- 36: Drosselanschluss
- 37: Luftspalt
- 38: Stirnfläche
- 39: Stirnfläche
- 40: Leitungsabschlussglied
- 41: Flachbandkabel
- 42: Hinleiter
- 43: Rückleiter
- 44: Kern
- 45: parasitäre Kapazität
- 46: Sekundärschleife
- 47: Primärwicklung
- 48: Transformator
- 49: Sekundärwicklung
- 50: Endkappe
- 51: Zwischenraum
- 52: Zwischenraum
- 53: Kernpaar
- 54: Distanzplatte
- 60: mittlerer Querbalken
- 61: äußerer Querbalken
- 62: Schaft

Die Erfindung wird nun anhand von Abbildungen näher erläutert:

Es zeigt
- Figur 1 eine Anlage zur berührungslosen Leistungsversorgung beweglicher Verbraucher nach dem Stand der Technik,
- Figur 2 das Schaltbild eines erfindungsgemäßen Leitungsabschlussglieds,
- Figur 3a eine Schnittansicht durch die Drossel des Leitungsabschlussglieds nach Figur 2,
- Figur 3b eine Draufsicht auf die Drossel nach Figur 3a,
- Figur 4 die Prinzipskizze eines weiteren erfindungsgemäßen Leitungsabschlussglieds,
- Figur 5 ein Ersatzschaltbild für das Leitungsabschlussglied nach Figur 4,
- Figur 6 die Frequenzabhängigkeit des Betrags der Impedanz der Leitungsabschlussglieds nach dem Ersatzschaltbild in Figur 5 und
- Figur 7 die Frequenzabhängigkeit der induzierter Spannung und des induzierten Stroms im Sekundärkreis des Transformators nach dem Ersatzschaltbild in Figur 5.

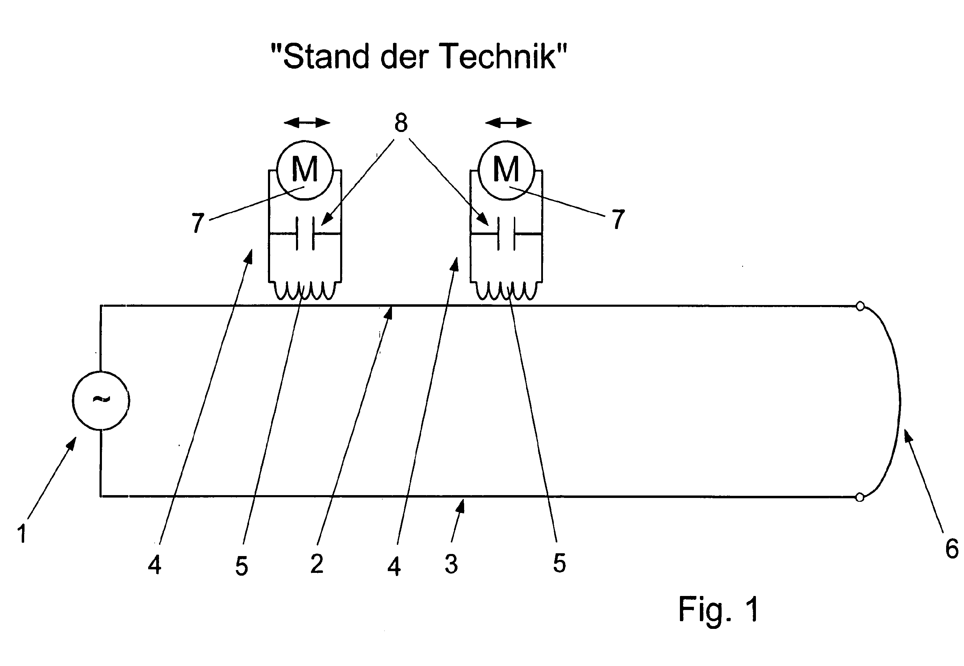

Figur 1 zeigt schematisch eine Anlage zur berührungslosen Leistungsversorgung beweglicher Verbraucher. Eine Konstantstromquelle 1 speist ein Primärleitersystem mit einem Leistungssignal in Form eines Wechselstroms mit einer Amplitude von 60A und einer Frequenz von 25kHz. Die Frequenz des Leistungssignals wird im Wesentlichen konstant gehalten und bewegt sich nur in einem schmalen, ersten Frequenzbereich. Die Amplitude des Leistungssignals wird ebenfalls konstant gehalten. Das Primärleitersystem wird aus einem Hinleiter 2 und einem Rückleiter 3 und einem Leitungsabschluss 6 gebildet. Der Abstand zwischen Hinleiter 2 und Rückleiter 3 beträgt konstant 120 mm entlang des Primärleitersystems. Das Primärleitersystem ist auf eine Fertigungsanlage, beispielsweise eine Einschienen-Hängebahn, zugeschnitten und hat eine Länge von ungefähr 150 m. Bewegliche Verbraucher 4 sind über jeweils eine Pickup-Spule 5 induktiv an das Primärleitersystem gekoppelt. Die beweglichen Verbraucher 4 sind entlang des Primärleitersystems verschiebbar. Sie umfassen jeweils eine zu ihrer Pickup-Spule 5 parallel geschaltete Kapazität 8, durch die die Pickup-Spule 4 zu einem Resonanzschwingkreis ergänzt wird, dessen Resonanzfrequenz auf die Frequenz des Leistungssignals abgestimmt ist. Die Verbraucher 4 umfassen weiter jeweils eine Antriebseinheit 7 oder eine andere Nutzlast, die aus dem Leistungssignal des Primärleiters gespeist wird.

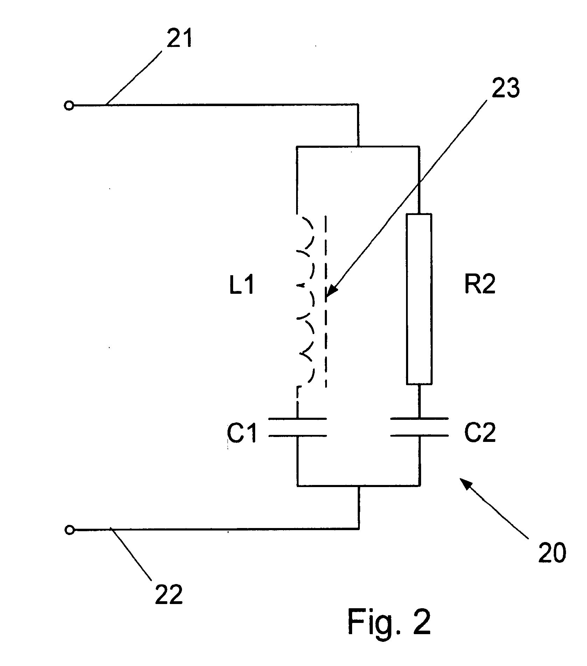

Figur 2 zeigt ein erfindungsgemäßes Leitungsabschlussglied 20, das anstelle des Leitungsabschlusses 6 in Figur 1 eingesetzt wird. Hierzu wird der Hinleiter 21 mit dem Hinleiter 3 des Primärleitersystems verbunden und der Rückleiter 23 mit dem Rückleiter 4 des Primärleitersystems.

Das Leitungsabschlussglied 20 umfasst einen Reihenschwingkreis, der aus einer Induktivität L1 mit einem ferromagnetischen Kern 23 und einer ersten Kapazität C1 gebildet wird, und einen Hochpass, der aus einer Reihenschaltung eines ohmschen Widerstandes R2 und einer zweiten Kapazität C2 gebildet wird.

Der Reihenschwingkreis ist auf die Frequenz des Leistungssignals abgestimmt, das in einem schmalen Frequenzbereich um eine Mittenfrequenz von 25 kHz übertragen wird. Um die Verluste zu begrenzen, wird eine möglichst kleine Induktivität L1 von 40 µH eingesetzt. Die Kapazität C1 wird daher zu 1 µF gewählt.

Die Grenzfrequenz des Hochpasses ist so gewählt, dass das Leistungssignal gesperrt wird. Der Widerstand R2 beträgt 200 Ω, um einen ausreichenden Abschluss für Datensignale auf dem Primärleitersystem zu bewirken. Mit einer Kapazität C2 von 0,2 µF ergibt sich somit eine Grenzfrequenz des Hochpasses von 50 kHz.

Der erforderliche Wert des Widerstands R2 hängt logarithmisch von dem Abstand der Leiter 2, 3 ab und liegt für ein Primärleitersystem mit einem Leiterabstand von 1 cm bei etwas über 100 Ω.

Mit dem Leitungsabschlussglied 20 ist eine Datenkommunikation zwischen den beweglichen Verbrauchern 4 und zwischen jedem Verbraucher 4 und einer räumlich festen Zentrale über das Primärleitersystem 2, 3 möglich. Hierzu wird ein zweites Frequenzbereich oberhalb der Frequenz des Leistungssignals verwendet, beispielsweise im Bereich 1-2MHz. Die Verbraucher 4 verfügen über Mittel zur Modulation eines Datensignals auf den Primärleitersystem 2, 3 und/oder Mittel zum Empfang eines Datensignals vom Primärleiter. Somit stellen die Verbraucher 4 eine Quelle und/oder eine Senke für die Datensignale im zweiten Frequenzbereichs auf dem Primärleitersystem 2, 3. Eine räumlich feste Zentrale verfügt ebenfalls über Mittel zur Modulation und zum Empfang von Datensignalen und ist mit dem Generator 1 In eine gemeinsame Einheit integriert. Die Datensignale werden nach einem Busprotokoll ausgetauscht, wobei die räumlich feste Zentrale als Master arbeitet und die beweglichen Verbraucher 4 Slaves darstellen.

Das Leitungsabschlussglied 20 weist somit im ersten Frequenzbereich einen niedrigen Wirkwiderstand auf, der wegen der Abstimmung der Induktivität L1 und der Kapazität C1 verschwindend klein, insbesondere kleiner als 20 mΩ, ist. Im zweiten Frequenzbereich weist das Leitungsabschlussglied 20 einen hohen Wirkwiderstand auf, der im Wesentlichen durch den Widerstand R2 bestimmt wird. Somit stellt das Leitungsabschlussglied 20 für die Datenkommunikation einen Abschluss des Primärleitersystems 2, 3 dar. Reflektionen der Datensignale am Leitungsende des Primärleitersystems 2, 3, die eine Datenkommunikation stören würden, werden somit wirksam unterdrückt.

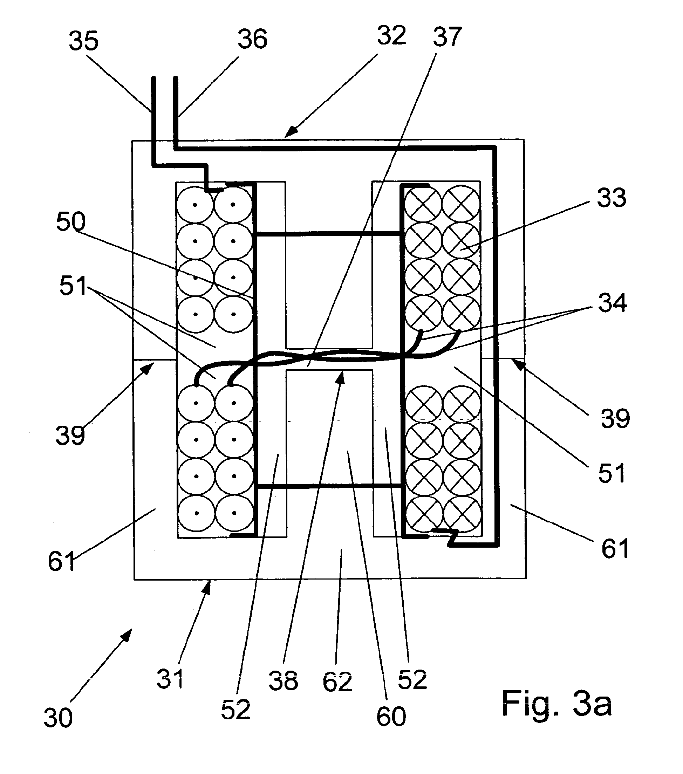

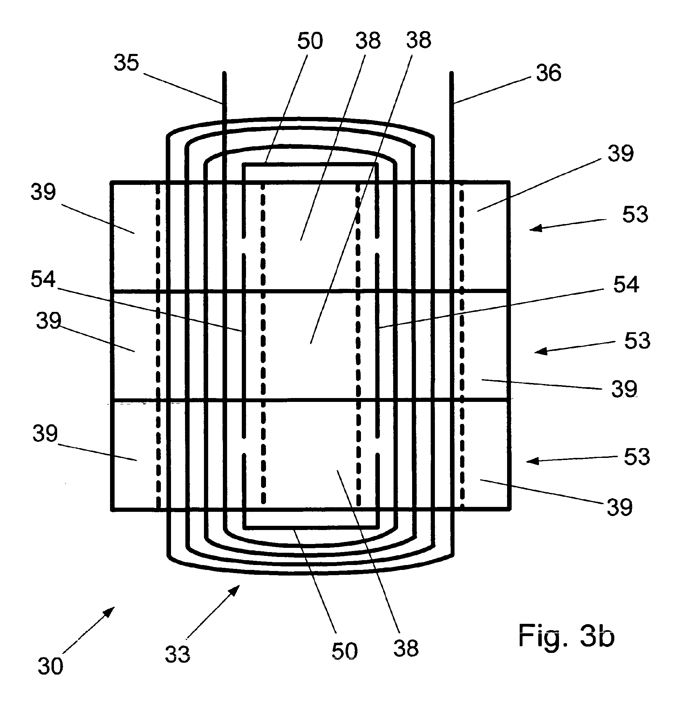

Figur 3a zeigt eine Schnittansicht der Drossel 30, wie sie als induktivität L1 in einem Leitungsabschlussglied 20 nach Figur 2 eingesetzt wird. Figur 3b zeigt eine Draufsicht auf die Drossel 30.

Der ferromagnetische Kern 23 der Drossel 30 wird aus drei nebeneinander angeordneten Kernpaaren 53 gebildet, die jeweils aus einem oberen E-förmigen Kern 32 und einem unteren E-förmigen Kern 31 zusammengesetzt sind, wobei sich die Seitenflächen der Kernpaare 53 berühren. Diese Anordnung mehrerer Kernpaare 53 verhindert, dass die Drossel durch das Leistungssignal im Sättigungsbereich der Magnetisierungskurve betrieben wird.

Jeder E-förmige Kern 31, 32 ist aus ferromagnetischem Material, einem Weichferrit wie Nickel-Zink-Ferrit, beispielsweise dem Material "3F3" der Firma Ferroxcube/Einhoven, gefertigt und besteht aus einem Schaft 62, einem mittlerer Querbalken 60 und zwei äußeren Querbalken 61. Die Stirnflächen 39 der äußeren Querbalken 61 jeweils zweier E-förmiger Kerne 31, 32 sind paarweise in Deckung gebracht. Somit wird ein geschlossener magnetischer Kreis durch die äußeren Querbalken 61 und die Schäfte 62 gebildet. Jedes so gebildete Kernpaar 53 ist ungefähr 70 mm breit und in etwa quadratisch, ungefähr 30 mm tief und ungefähr 10 mm stark. Die Summe der Oberflächeninhalte der Stirnflächen 39 der äußeren Querbalken ist gleich dem Oberflächeninhalt der Stirnfläche 38 des mittleren Querbalkens und beträgt 600 mm². Die mittleren Querbalken 60 sind kürzer ausgeführt als die äußeren Querbalken 61. Die Stirnflächen 38 der mittleren Querbalken 60 begrenzen somit einen Luftspalt 37 von 2 mm. Der Luftspalt 37 bewirkt eine Abflachung der Magnetisierungskurve und eine Verminderung der Hysterese. Somit ist die Drossel 30 auch bei großen Stromstärken von 60 A unterhalb der Sättigung des ferromagnetischen Materials betreibbar. Hierdurch wird ein Aufheizen des Kernmaterials verringert.

Auf den nach außen weisenden Seitenflächen der mittleren Querbalken 60 der äußeren Kernpaare sitzt jeweils eine Endkappe 50, über die die Wicklung 33 der Drossel 30 verlaufen. Die Endkappen 60 umgeben die mittleren Querbalken 60 U-förmig und sind aus Kunststoff gefertigt. Die Wicklungen 33 sind aus einem Paar von Litzenkabel mit einer jeweiligen Gesamtquerschnittsfläche von 5 mm² ausgeführt. Die einzelnen Litzen in einem Litzenkabel sind miteinander verdrillt, und die Litzenkabel des Paares sind ebenfalls miteinander verdrillt. Somit wird vermieden, dass in einzelnen Strängen der Wicklung 33 unterschiedliche Spannungen induziert werden, durch die Parallelschaltung der Stränge an den Verbindungen der Drosselanschlüsse 35, 36 mit der Wicklung Kreisströme bewirken. Die Wicklung 33 besteht aus acht Windungen 34.

In einer Weiterbildung wird anstatt des Paares von Litzenkabeln ein einziges Litzenkabel mit einer Querschnittsfläche von mindestens 7 mm² verwendet. In anderen Ausführungsbeispielen wird eine Windungszahl zwischen 5 und 15 erreicht. In weiteren Ausführungsbeispielen werden mehr als drei Kernpaar nebeneinander angeordnet oder es wird ein Kernpaar aus zwei unterschiedlichen E-förmigen Kernen gebildet oder aus einem E-förmigen Kern und einem gerade darüber gelegten Joch.

Die Endkappen 50 stellen einen Zwischenraum 52 her zwischen der Wicklung 33 und den mittleren Querbalken 60 der Kerne 31, 32. Somit verlaufen die Windungen der Wicklung 33 nicht in den Bereichen um die Kerne, in denen der magnetische Feldverlauf, gestört beispielsweise durch den Luftspalt 37, nicht homogen ist. Distanzplatten 54 sind auf beiden Seiten des mittleren Querbalkens zwischen Kernen und

Die Wicklung 33 ist zudem so ausgeführt, dass die Querbalken 60, 61 der Kerne die jeweils letzte Windung 34 überragen und so Zwischenräume 51 gebildet werden im Bereich des Luftspalts 37.

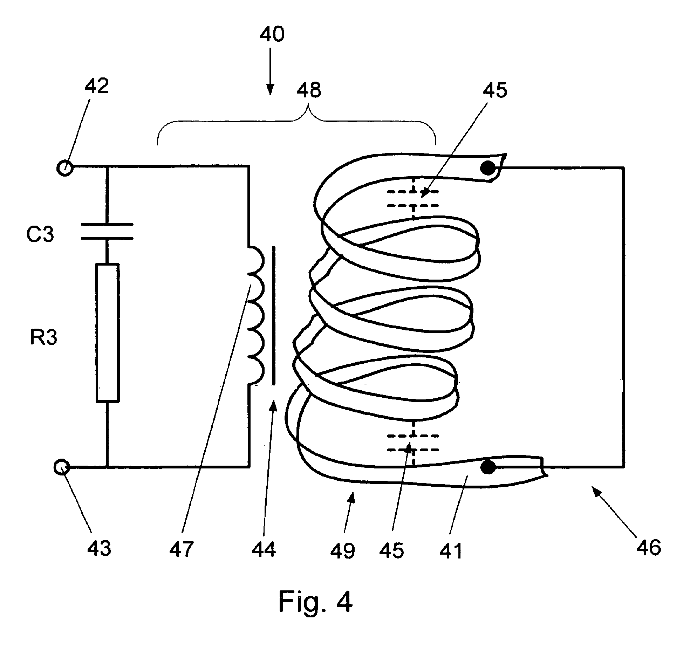

Figur 4 zeigt ein weiteres Leitungsabschlussglied 40. Ein Transformator 48 wird durch eine Primärwicklung 47, einen Kern 44 und eine Sekundärwicklung 49 gebildet, wobei die Sekundärwicklung 49 aus einem Kupfer-Flachbandkabel 41 ausgeführt ist. Die Enden des Flachbandkabels 41 sind zu einer Sekundärschleife 46 kurzgeschlossen.

Der Hinleiter 42 des Leitungsabschlussglieds 40 ist über Anschlussmittel mit dem Hinleiter 2 des Primärleitersystems und der Rückleiter 43 über Anschlussmittel mit dem Rückleiter 3 des Primärleitersystems verbunden.

Durch die Ausführung der Sekundärwicklung des Transformators als Flachbandwicklung werden parasitäre Kapazitäten 45 gebildet, welche die Windungen der Sekundärwicklung für die Datensignale praktisch kurzschließen. Somit wirkt die Primärwicklung 47 für die Datensignale als Drossel. Ein zur Primärwicklung 47 parallel geschalteter Widerstand R3 schließt somit das Primärleitersystem für Datensignale ab. Es wird ein Widerstand R3 von 200 Ω gewählt. Somit stellt das Leitungsabschlussglied 40 im Frequenzbereich der Datensignale einen hohen Wirkwiderstand auf.

Zusätzlich kann ein Kondensator mit einer Kapazität C3 vorgesehen werden, um den Widerstand R3 für das Leistungssignal zu sperren.

Für das Leistungssignal ist die Sekundärwicklung 49 des Transformators 48 dagegen nicht unwirksam. Es wird somit ein Strom in der Sekundärschleife 46 induziert. Der Transformator 48 ist somit für das Leistungssignal im Kurzschlussbetrieb und weist daher im Frequenzbereich des Leistungssignals einen geringen Wirkwiderstand auf, der höchstens in der Größenordnung einiger Milliohm liegt.

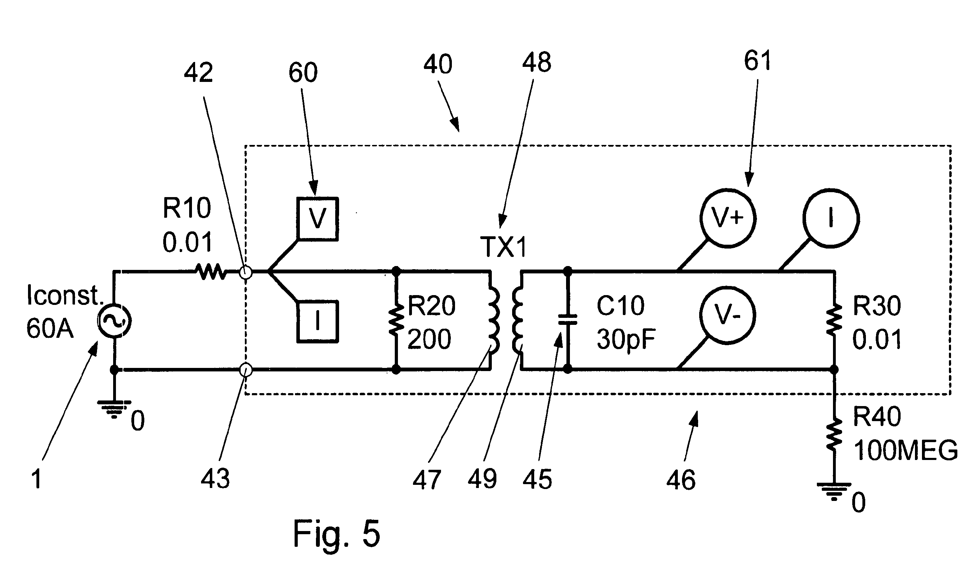

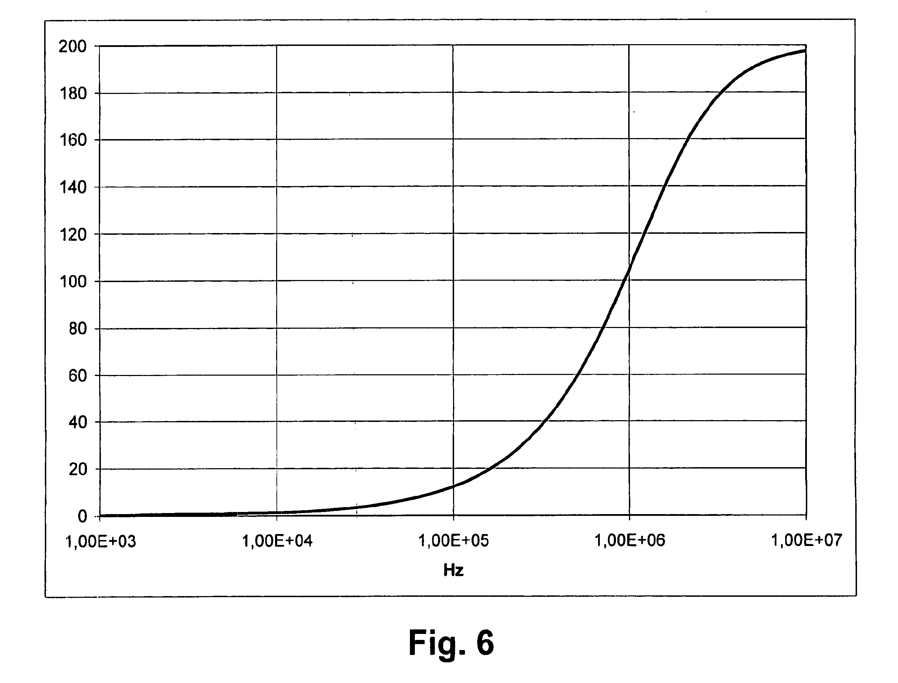

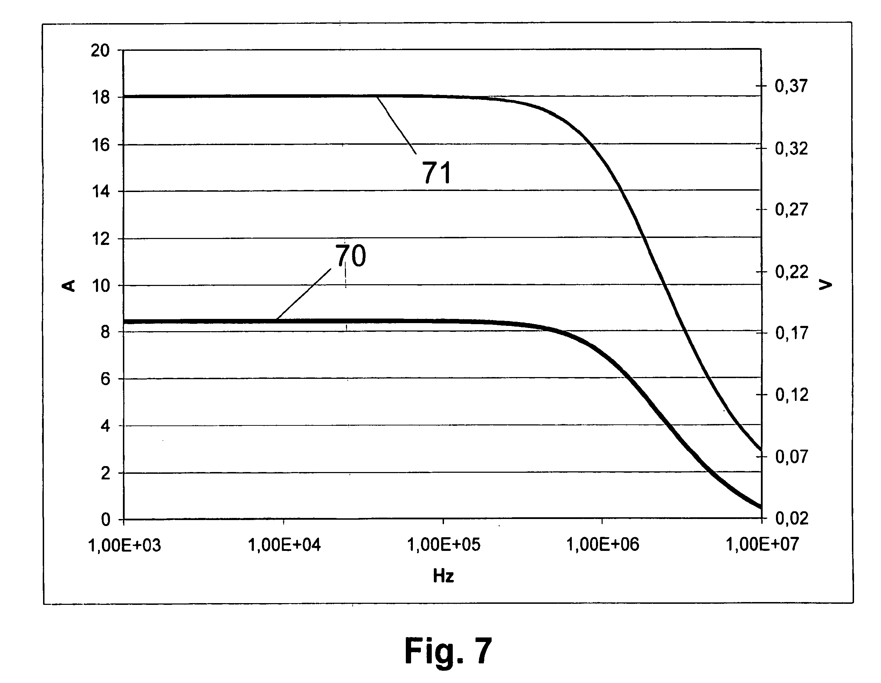

Figur 5 zeigt ein Ersatzschaltbild für die Prinzipskizze nach Figur 4, wobei der Kondensator C3 nicht berücksichtigt wurde. Figur 6 und Figur 7 zeigen Ergebnisse einer Simulation anhand des Schaltbilds aus Figur 5. Zur Berechnung wurde ein ohmscher Widerstand R10 für das Primärleitersystem von 0,01 Ω, ein Abschlusswiderstand R20 von 200 Ω, eine parasitäre Kapazität C10 von 30 pF und ein ohmscher Widerstand der Sekundärschleife 46 von 0,01 Ω angenommen. Die Primärwicklung 47 des Transformators 47 hat eine Induktivität von 200 µH, die Sekundärwicklung von 2000 µH. Die eingesetzten Werte entsprechen einem Ausführungsbeispiel. Der Widerstand R40 von 100 MΩ wird für die numerische Simulation benötigt.

Die Konstantstromquelle 1 prägt für die Berechnung einen Strom von 60 A einer Frequenz zwischen 1 kHz und 10 MHz auf das Primärleitersystem auf. An einem ersten Berechnungspunkt 60 werden Strom und Spannung berechnet, und es wird der Betrag der Impedanz ermittelt. Figur 6 zeigt, dass das Leitungsabschlussglied 40 unterhalb vom 100 kHz eine Impedanz aufweist, die ein Zehntel der Impedanz von einigen MHz beträgt. Der Wirkwiderstand ist in diesem Bereich nochmals reduziert. In einem ersten Frequenzbereich unterhalb 100 kHz, also insbesondere im Bereich der Frequenz des Leistungssignals, stellt das Leistungsabschlussglied 40 somit einen niedrigen Wirkwiderstand dar, während in einem zweiten Frequenzbereich, insbesondere im Bereich der Datenkommunikation oberhalb von 1 MHz, das Leitungsabschlussglied 40 einen hohen Wirkwiderstand aufweist. Somit ermöglicht das Leitungsabschlussglied 40 einerseits die Einspeisung eines mittelfrequenten Starkstroms von 60 A bei 25 kHz in das Primärleitersystem und andererseits durch einen reflexionsfreien Abschluss des Primärleitersystems eine störungsarme Datenkommunikation.

Figur 7 zeigt die Frequenzabhängigkeit von Strom und Spannung an einem zweiten Berechnungspunkt 61, der in der Sekundärschleife 46 liegt. Die untere Kurve 70 gibt den Spannungsverlauf wieder und bezieht sich auf die rechte Ordinate, die obere Kurve 71 gibt den Stromverlauf 71 wieder und bezieht sich auf die linke Ordinate. Deutlich ist der Abfall des induzierten Stroms in der Sekundärschleife 46 oberhalb 1 MHz zu sehen. Insgesamt entsteht sekundärseitig eine Verlustleistung von maximal 4 W, die durch Verbesserung des Transformators, beispielsweise Erhöhung der Induktivität der Sekundärspule 49, weiter verringert werden kann.

In einem Ausführungsbeispiel ist der Kern des Transformators 48 wie ein einziges Kernpaar 53 oder wie zwei Kernpaare des Ausführungsbeispiels nach Figur 3a und 3b ausgebildet. Hier kann weniger ferromagnetisches Material eingesetzt werden, weil im Transformator im Gegensatz zu einer Drossel Gegenfelder induziert werden, die das Magnetfeld im Transformatorkern abschwächen. Somit wird die Sättigung des Kernmaterials erst bei größeren Stromstärken errecht.

## Patentansprüche

1. Leitungsabschlussglied (20, 40) zum Leitungsabschluss eines Primärleiters (2, 3, 21, 22, 35, 36, 41, 42) einer Vorrichtung zur berührungslosen Leistungs- und Datenübertragung, **dadurch gekennzeichnet, dass** es eine Parallelschaltung eines Reihenschwingkreises (L1, C1) und eines Hochpasses (C2, C3) umfasst,
wobei der Reihenschwingkreis (L1, C1) eine Drossel (30) umfasst,
deren Wicklung (33, 34) aus verdrilltem Litzenkabel gefertigt ist,
wobei der Reihenschwingkreis (L1, C1) für einen stärkeren, insbesondere einen 10mal oder 100mal stärkeren, Strom ausgelegt ist als der Hochpass (C2, C3).

2. Leitungsabschlussglied (20, 40) nach Anspruch 1,
**dadurch gekennzeichnet, dass**,
die Grenzfrequenz des Hochpasses (C2, C3) größer ist, insbesondere 10fach größer ist, als die Resonanzfrequenz des Reihenschwingkreises (L1, C1).

3. Leitungsabschlussglied (20, 40) zum Leitungsabschluss eines Primärleiters (2, 3, 21, 22, 35, 36, 41, 42) einer Vorrichtung zur berührungslosen Leistungs- und Datenübertragung, **dadurch gekennzeichnet, dass** es einen Transformator (48) umfasst, der sekundärseitig kurzgeschlossen ist, wobei die Sekundärwicklung (49) aus Flachbandkabel gefertigt ist
wobei der Transformator (48) primärseitig in Parallelschallung mit einem Hochpass (C3) verbunden ist, insbesondere mit einem einen Widerstand (R3) umfassenden Hochpass.

4. Vorrichtung zur berührungslosen Leistungs- und Datenübertragung,
umfassend ein Primärleitersystem (2, 3, 21, 22, 35, 36, 41, 42) aus einem Hinleiter (2, 21, 35, 41) und einen Rückleiter (3, 22, 36, 42),
einen Generator (1), der in das Primärleitersystem (2, 3, 21, 22, 35, 36, 41, 42) einen Wechselstrom mit einer ersten Frequenz in einem ersten Frequenzbereich und einer Amplitude I als Leistungssignal einprägt,
mindestens einen beweglichen Verbraucher (4), der induktiv an das Primärleitersystem (2, 3, 21, 22, 35, 36, 41, 42) gekoppelt ist und eine Quelle und/oder Senke für Wechselstrom in einem zweiten Frequenzbereich als Datensignal umfasst,
**dadurch gekennzeichnet, dass**
an einem Ende des Primärleitersystems (2, 3, 21, 22, 35, 36, 41, 42) ein Abschlussglied (20, 40) angeschlossen ist,
wobei das Abschlussglied (20, 40) im ersten Frequenzbereich einen niedrigen Wirkwiderstand R_{L}
und im zweiten Frequenzbereich einen hohen Wirkwiderstand R_{D} aufweist.

5. Vorrichtung nach Anspruch 4,
**dadurch gekennzeichnet, dass**
der hohe Wirkwiderstand im Wesentlichen gleich dem Leitungswellenwiderstand des Primärleitersystems (2, 3, 21, 22, 35, 36, 41, 42) ist
und/oder
der niedrige Wirkwiderstand höchstens ein Hundertstel des hohen Wirkwiderstands beträgt, und/oder
das Produkt aus dem hohen Wirkwiderstand R_{D} und dem Quadrat der Amplitude I des Leistungssignals größer als 10kW ist.

6. Vorrichtung nach einem der Ansprüche 4 oder 5,
**dadurch gekennzeichnet, dass**
das Abschlussglied (20, 40) eine Parallelschaltung eines Reihenschwingkreises (C1, L1) und eines Hochpasses (C2) umfasst,
wobei der Reihenschwingkreis (C1, L1) vorzugsweise eine Kapazität (C1) von mindestens 100 nF umfasst,
und dass die Resonanzfrequenz des Reihenschwingkreises (C1, L1) auf den ersten Frequenzbereich abgestimmt ist,
insbesondere wobei die Grenzfrequenz des Hochpasses (C2, C3) oberhalb des ersten Frequenzbereichs liegt.

7. Vorrichtung nach einem der Ansprüche 4 bis 6,
**dadurch gekennzeichnet, dass**
der Hochpass (C2, C3) im zweiten Frequenzbereich einen ohmschen Widerstand (R2, R3) umfasst, der im Wesentlichen gleich dem Leitungswellenwiderstand des Primärleitersystems (2, 3, 21, 22, 35, 36, 41, 42) ist
und/oder
der Hochpass (C2, C3) einen ohmschen Widerstand (R2, R3) umfasst, der im ersten Frequenzbereich keine Wirkung hat,
insbesondere wobei
der Hochpass (C2, C3) einen ohmschen Widerstand (R2, R3) von mindestens 100 Ω, insbesondere 200 Ω, umfasst.

8. Vorrichtung nach einem der Ansprüche 4 bis 7,
**dadurch gekennzeichnet, dass**
der Reihenschwingkreis (C1, L1) eine Drossel (30) mit einem ferromagnetischen Kern (23) umfasst,
insbesondere wobei
der ferromagnetische Kern (23) mindestens ein Paar von E-förmigen Kernen (31, 32) umfasst,
deren Stirnflächen (39) der äußeren Querbalken (61) der E-förmigen Kerne (31, 32) sich vorzugsweise paarweise berühren
und die Drossel (30) vorzugsweise eine Wicklung (33, 34) umfasst, welche die mittleren Querbalken (60) der E-förmigen Kerne (31, 32) umschließt,
und/oder
vorzugsweise ein Luftspalt (37) zwischen den Stirnflächen (38) der mittleren Querbalken (60) des E-förmigen Kerns (31, 32) ausgebildet ist
und/oder
vorzugsweise die Drossel (30) mindestens eine Endkappe umfasst,
auf welche die Wicklung (33, 34) aufgebracht ist,
wobei vorzugsweise ein Abstand der Wicklung (33, 34) zum mittleren Querbalken (60) des E-förmigen Kerns (31, 32) eingehalten wird,
wobei die Enden der mittleren Querbalken (60) der E-förmigen Kerne (31, 32) vorzugsweise die sie jeweils umschließenden Wicklungen (33, 34) überragen.

9. Vorrichtung nach einem der Ansprüche 4 bis 8,
**dadurch gekennzeichnet, dass**
die Wicklung (33, 34) aus verdrillten Leitern und/oder verdrilltem Litzendraht gebildet wird.

10. Vorrichtung nach einem der Ansprüche 4 bis 9,
**dadurch gekennzeichnet, dass**
der ferromagnetische Kern (23) aus mehreren nebeneinander angeordneten Paaren von E-förmigen Kernen (31, 32) zusammengesetzt ist,
wobei die Wicklung (33, 34) der Drossel (30) die mittleren Querbalken (60) der E-förmigen Kerne (31, 32) umschließt
und wobei zwischen der Wicklung (33, 34) und den mittleren Querbalken (60) der E-förmigen Kerne (31, 32) Distanzplatten eingefügt sind.

11. Vorrichtung nach einem der Ansprüche 4 bis 10,
**dadurch gekennzeichnet, dass**
ein Widerstand (R3) von einer elektronischen Schaltung umfasst wird, wobei die elektronische Schaltung parallel zur Primärseite eines Transformators (48) geschaltet ist und die Sekundärseite des Transformators (48) kurzgeschlossen ist,
und dass der Widerstand (r3) vorzugsweise im Wesentlichen gleich dem Leitungswellenwiderstand des Primärleitersystems (2, 3, 21, 22, 35, 36, 42, 43) ist.

12. Vorrichtung nach einem der Ansprüche 4 bis 11,
**dadurch gekennzeichnet, dass**
die Sekundärwicklung (49) des Transformators (48) aus einem Flachbandkabel gefertigt ist.

13. Vorrichtung nach einem der Ansprüche 4 bis 12,
**dadurch gekennzeichnet, dass**
die Amplitude I des Leistungssignals mindestens 50A, insbesondere mindestens 60A, beträgt und/oder
die erste Frequenz 20 kHz oder 25kHz beträgt
und/oder
der zweite Frequenzbereich sich oberhalb von 500kHz erstreckt.

14. Vorrichtung nach einem der Ansprüche 4 bis 13,
**dadurch gekennzeichnet, dass**
das Abschlussglied (20, 40) als steckbares Modul ausgebildet ist, das an Hinleiter (2, 21, 35, 41) und Rückleiter (3, 22, 36, 42) des Primärleitersystams (2, 3, 21, 22, 35, 36, 41, 42) angeschlossen ist, insbesondere wobei das Abschlussglied (20, 40) vorzugsweise nach einem der Ansprüche 1 bis 3 ausgebildet ist.

## Claims

1. Line termination element (20, 40) for the line termination of a primary conductor (2, 3, 21, 22, 35, 36, 41, 42) of an apparatus for contactless transmission of power and data, **characterised in that** it comprises a parallel connection of a series resonant circuit (L1, C1) and a high pass (C2, C3),
the series resonant circuit (L1, C1) comprising a choke (30),
the winding (33, 34) of which is produced from twisted litz wire cable,
the series resonant circuit (L1, C1) being designed for a stronger, in particular 10-times or 100-times stronger, current than the high pass (C2, C3).

2. Line termination element (20, 40) according to Claim 1,
**characterised in that**
the cut-off frequency of the high pass (C2, C3) is greater, in particular 10-times greater, than the resonant frequency of the series resonant circuit (L1, C1).

3. Line termination element (20, 40) for the line termination of a primary conductor (2, 3, 21, 22, 35, 36, 41, 42) of an apparatus for contactless transmission of power and data, **characterised in that** it comprises a transformer (48) which is short-circuited on the secondary side, the secondary winding (49) being produced as ribbon cable,
the transformer (48) being connected on the primary side in parallel with a high pass (C3), in particular with a high pass comprising a resistance (R3).

4. Apparatus for contactless transmission of power and data,
comprising a primary conductor system (2, 3, 21, 22, 35, 36, 41, 42), consisting of a forward conductor (2, 21, 35, 41) and a return conductor (3, 22, 36, 42),
a generator (1) which impresses upon the primary conductor system (2, 3, 21, 22, 35, 36, 41, 42) an alternating current with a first frequency in a first frequency range and an amplitude I as a power signal,
at least one movable load (4), which is inductively coupled to the primary conductor system (2, 3, 21, 22, 35, 36, 41, 42) and comprises a source and/or sink for alternating current in a second frequency range as a data signal,
**characterised in that**
a termination element (20, 40) is connected to one end of the primary conductor system (2, 3, 21, 22, 35, 36, 41, 42),
the termination element (20, 40) having a low effective resistance R_{L} in the first frequency range and a high effective resistance R_{D} in the second frequency range.

5. Apparatus according to Claim 4,
**characterised in that**
the high effective resistance is substantially equal to the line surge impedance of the primary conductor system (2, 3, 21, 22, 35, 36, 41, 42)
and/or
the low effective resistance is at most a hundredth of the high effective resistance
and/or
the product of the high effective resistance R_{D} and the square of the amplitude I of the power signal is greater than 10 kW.

6. Apparatus according to one of Claims 4 or 5,
**characterised in that**
the termination element (20, 40) comprises a parallel connection of a series resonant circuit (C1, L1) and a high pass (C2),
the series resonant circuit (C1, L1) preferably comprising a capacitance (C1) of at least 100 nF,
and **in that** the resonant frequency of the series resonant circuit (C1, L1) is tuned to the first frequency range, in particular, the cut-off frequency of the high pass (C2, C3) lying above the first frequency range.

7. Apparatus according to one of Claims 4 to 6,
**characterised in that**
the high pass (C2, C3) comprises in the second frequency range an ohmic resistance (R2, R3) which is substantially equal to the line surge impedance of the primary conductor system (2, 3, 21, 22, 35, 36, 41, 42)
and/or
the high pass (C2, C3) comprises an ohmic resistance (R2, R3) which has no effect in the first frequency range,
in particular,
the high pass (C2, C3) comprising an ohmic resistance (R2, R3) of at least 100 Ω, in particular 200 Ω.

8. Apparatus according to one of Claims 4 to 7,
**characterised in that**
the series resonant circuit (C1, L1) comprises a choke (30) with a ferromagnetic core (23),
in particular,
the ferromagnetic core (23) comprising at least one pair of E-shaped cores (31, 32),
the end faces (39) of the outer crossbars (61) of the E-shaped cores (31, 32) of which are in mutual contact preferably in pairs
and the choke (30) preferably comprises a winding (33, 34) which surrounds the central crossbars (60) of the E-shaped cores (31, 32),
and/or
preferably an air gap (37) is formed between the end faces (38) of the central crossbars (60) of the E-shaped core (31, 32)
and/or
preferably the choke (30) comprises at least one end cap, on which the winding (33, 34) is placed,
preferably a clearance being maintained between the winding (33, 34) and the central crossbar (60) of the E-shaped cores (31, 32),
the ends of the central crossbars (60) of the E-shaped cores (31, 32) preferably projecting from the windings (33, 34) respectively surrounding them.

9. Apparatus according to one of Claims 4 to 8,
**characterised in that**
the winding (33, 34) is formed from twisted conductors and/or twisted litz wire.

10. Apparatus according to one of Claims 4 to 9,
**characterised in that**
the ferromagnetic core (23) is composed of a plurality of pairs of E-shaped cores (31, 32) arranged side by side, the winding (33, 34) of the choke (30) surrounding the central crossbars (60) of the E-shaped cores (31, 32) and distance plates being inserted between the winding (33, 34) and the central crossbars (60) of the E-shaped cores (31, 32).

11. Apparatus according to one of Claims 4 to 10,
**characterised in that**
a resistance (R3) is comprised of an electronic circuit, the electronic circuit being connected in parallel with the primary side of a transformer (48) and the secondary side of the transformer (48) being short-circuited,
and **in that** the resistance (r3) is preferably substantially equal to the line surge impedance of the primary conductor system (2, 3, 21, 22, 35, 36, 42, 43).

12. Apparatus according to one of Claims 4 to 11,
**characterised in that**
the secondary winding (49) of the transformer (48) is produced from a ribbon cable.

13. Apparatus according to one of Claims 4 to 12,
**characterised in that**
the amplitude I of the power signal is at least 50A, in particular at least 60A,
and/or
the first frequency is 20 kHz or 25 kHz
and/or
the second frequency range extends above 500 kHz.

14. Apparatus according to one of Claims 4 to 13,
**characterised in that**
the termination element (20, 40) is formed as a plug-in module which is connected to the forward conductor (2, 21, 35, 41) and the return conductor (3, 22, 36, 42) of the primary conductor system (2, 3, 21, 22, 35, 36, 41, 42), in particular the termination element (20, 40) preferably being formed according to one of Claims 1 to 3.

## Revendications

1. Elément de terminaison de ligne (20, 40) pour la terminaison de ligne d'un conducteur primaire (2, 3, 21, 22, 35, 36, 41, 42) d'un dispositif de transmission de puissance et de données sans contact, **caractérisé en ce qu'**il comprend un montage en parallèle d'un circuit oscillant série (L1, C1) et d'un filtre passe-haut (C2, C3),
le circuit oscillant série (L1, C1) comprenant une bobine (30) dont l'enroulement (33, 34) est réalisé en câble multibrins torsadé,
le circuit oscillant série (L1, C1) étant dimensionné pour un courant plus fort, en particulier 10 fois ou 100 fois plus fort que le filtre passe-haut (C2, C3).

2. Elément de terminaison de ligne (20, 40) selon la revendication 1,
**caractérisé en ce**
**que** la fréquence seuil du filtre passe-haut (C2, C3) est supérieure, en particulier 10 fois supérieure, à la fréquence de résonance du circuit oscillant série (L1, C1).

3. Elément de terminaison de ligne (20, 40) pour la terminaison de ligne d'un conducteur primaire (2, 3, 21, 22, 35, 36, 41, 42) d'un dispositif de transmission de puissance et de données sans contact, **caractérisé en ce qu'**il comprend un transformateur (48) qui est court-circuité côté secondaire, l'enroulement secondaire (49) étant réalisé en câble plat,
le transformateur (48) étant branché côté primaire en parallèle avec un filtre passe-haut (C3), en particulier avec un filtre passe-haut comprenant une résistance (R3).

4. Dispositif de transmission de puissance et de données sans contact,
comprenant un système de conducteurs primaires (2, 3, 21, 22, 35, 36, 41, 42) composé d'un conducteur aller (2, 21, 35, 41) et d'un conducteur retour (3, 22, 36, 42),
un générateur (1) qui applique un courant alternatif ayant une première fréquence dans une première gamme de fréquences et une amplitude I comme signal de puissance dans le système de conducteurs primaires (2, 3, 21, 22, 35, 36, 41, 42),
au moins un consommateur mobile (4) qui est couplé par induction au système de conducteurs primaires (2, 3, 21, 22, 35, 36, 41, 42) et comprend une source et/ou un récepteur de courant alternatif dans une deuxième gamme de fréquences comme signal de données,
**caractérisé en ce**
**qu'**un élément de terminaison (20, 40) est connecté à une extrémité du système de conducteurs primaires (2, 3, 21, 22, 35, 36, 41, 42),
l'élément de terminaison (20, 40) présentant une faible résistance active R_{L} dans la première gamme de fréquences
et une forte résistance active R_{D} dans la deuxième gamme de fréquences.

5. Dispositif selon la revendication 4,
**caractérisé en ce**
**que** la forte résistance active est essentiellement égale à l'impédance caractéristique de ligne du système de conducteurs primaires (2, 3, 21, 22, 35, 36, 41, 42) et/ou
la faible résistance active est au maximum égale au centième de la forte résistance active
et/ou le produit de la forte résistance active R_{D} et du carré de l'amplitude I du signal de puissance est supérieur à 10 kW.

6. Dispositif selon une des revendications 4 ou 5,
**caractérisé en ce**
**que** l'élément de terminaison (20, 40) comprend un montage en parallèle d'un circuit oscillant série (C1, L1) et d'un filtre passe-haut (C2),
le circuit oscillant série (C1, L1) comprenant de préférence une capacité (C1) d'au moins 100 nF,
et **que** la fréquence de résonance du circuit oscillant série (C1, L1) est accordée sur la première gamme de fréquences,
la fréquence seuil du filtre passe-haut (C2, C3) étant en particulier située au-dessus de la première gamme de fréquences.

7. Dispositif selon une des revendications 4 à 6,
**caractérisé en ce**
**que** le filtre passe-haut (C2, C3) comprend dans la deuxième gamme de fréquences une résistance ohmique (R2, R3) qui est essentiellement égale à l'impédance caractéristique de ligne du système de conducteurs primaires (2, 3, 21, 22, 35, 36, 41, 42) et/ou
le filtre passe-haut (C2, C3) comprend une résistance ohmique (R2, R3) qui n'a aucun effet dans la première gamme de fréquences,
le filtre passe-haut (C2, C3) comprenant en particulier une résistance ohmique (R2, R3) d'au moins 100 Ω, en particulier de 200 Ω.

8. Dispositif selon une des revendications 4 à 7,
**caractérisé en ce**
**que** le circuit oscillant série (C1, L1) comprend une bobine (30) avec un noyau ferromagnétique (23),
le noyau ferromagnétique (23) comprenant en particulier une paire de noyaux en forme de E (31, 32),
dont les faces frontales (39) des barres transversales extérieures (61) des noyaux en forme de E (31, 32) se touchent de préférence par paires
et la bobine (30) comprenant de préférence un enroulement (33, 34) qui entoure les barres transversales centrales (60) des noyaux en forme de E (31, 32),
et/ou
un entrefer (37) étant de préférence formé entre les faces frontales (38) des barres transversales centrales (60) du noyau en forme de E (31, 32)
et/ou
la bobine (30) comprenant de préférence au moins un capuchon d'extrémité sur lequel l'enroulement (33, 34) est appliqué,
une distance entre l'enroulement (33, 34) et la barre transversale centrale (60) du noyau en forme de E (31, 32) étant de préférence respectée,
les extrémités des barres transversales centrales (60) des noyaux en forme de E (31, 32) dépassant de préférence des enroulements (33, 34) qui les entourent.

9. Dispositif selon une des revendications 4 à 8,
**caractérisé en ce**
**que** l'enroulement (33, 34) est formé de conducteurs torsadés et/ou de fil multibrins torsadé.

10. Dispositif selon une des revendications 4 à 9,
**caractérisé en ce**
**que** le noyau ferromagnétique (23) est composé de plusieurs paires de noyaux en forme de E (31, 32) juxtaposées,
l'enroulement (33, 34) de la bobine (30) entourant les barres transversales centrales (60) des noyaux en forme de E (31, 32)
et des plaques d'écartement étant insérées entre l'enroulement (33, 34) et les barres transversales centrales (60) des noyaux en forme de E (31, 32).

11. Dispositif selon une des revendications 4 à 10,
**caractérisé en ce**
**qu'**une résistance (R3) est comprise par un circuit électronique, le circuit électronique étant monté en parallèle sur le côté primaire d'un transformateur (48) et le côté secondaire du transformateur (48) étant court-circuité,
et **que** la résistance (R3) est de préférence essentiellement égale à l'impédance caractéristique de ligne du système de conducteurs primaires (2, 3, 21, 22, 35, 36, 42, 43).

12. Dispositif selon une des revendications 4 à 11,
**caractérisé en ce**
**que** l'enroulement secondaire (49) du transformateur (48) est constitué d'un câble plat.

13. Dispositif selon une des revendications 4 à 12,
**caractérisé en ce**
**que** l'amplitude I du signal de puissance est d'au 50 A, en particulier d'au moins 60 A et/ou
la première fréquence est de 20 kHz ou 25 kHz
et/ou
la deuxième gamme de fréquences s'étend au-dessus de 500 kHz.

14. Dispositif selon une des revendications 4 à 13,
**caractérisé en ce**
**que** l'élément de terminaison (20, 40) est réalisé sous la forme d'un module enfichable qui est connecté au conducteur aller (2, 21, 35, 41) et au conducteur retour (3, 22, 36, 42) du système de conducteurs primaires (2, 3, 21, 22, 35, 36, 41, 42), l'élément de terminaison (20, 40) étant en particulier réalisé de préférence selon une des revendications 1 à 3.
